# EUROPÄISCHE PATENTSCHRIFT

(11) **EP 0 843 029 B1**
(45) Veröffentlichungstag und Bekanntmachung des Hinweises auf die Patenterteilung: **02.08.2006**
(21) Anmeldenummer: 97119306.5
(22) Anmeldetag: 05.11.1997
(51) Int. Cl.: D01F 1/10, D01F 6/70, C08K 9/06, C08L 75/04

(54) **Chlorbeständige Elastan-Fasern**
Chlorine-resistant elasthane fibers
Fibres d'élasthane résistant au chlore

(30) Priorität: 18.11.1996 DE 19647571
(43) Veröffentlichungstag der Anmeldung: 20.05.1998
(73) Patentinhaber: BAYER AG, 51368 Leverkusen (DE)
(72) Erfinder: Hütte, Stephan, Dr., 51065 Köln (DE); Meyer, Rolf-Volker, Dr., 51373 Leverkusen (DE); Wollweber, Hans-Joachim, Dr., 47800 Krefeld (DE); Heinrich, Karin-Anke, 41540 Dormagen (DE)

(56) Entgegenhaltungen:
- EP-A- 0 489 395
- EP-A- 0 558 758
- DATABASE WPI Section Ch, Week 9206 Derwent Publications Ltd., London, GB; Class A25, AN 92-046261 XP002055987 & JP 03 292 364 A (ASAHI CHEM IND CO LTD) , 24.Dezember 1991
- DATABASE WPI Section Ch, Week 8436 Derwent Publications Ltd., London, GB; Class A25, AN 84-223080 XP002055988 & JP 59 133 248 A (ASAHI CHEM IND CO LTD) , 31.Juli 1984

## Beschreibung

Die Erfindung betrifft Polyurethanzusammensetzungen und speziell daraus resultierende elastische Polyurethanfasern, die in wässrigen, chlorhaltigen Umgebungen, wie beispielsweise in Schwimmbädern für Badebekleidung eingesetzt werden können Die Erfindung betrifft insbesondere Polyurethanzusammensetzungen und speziell daraus resultierenden elastischen Polyurethanfasern, die mit Polyorganosiloxan oder einer Mischung von Polyorganosiloxan und Polyorganohydrogensiloxan beschichtete Hydrotalcite und/oder andere basische Metall-Aluminium-Hydroxy-Verbindungen enthalten.

Der im Rahmen der vorliegenden Erfindung verwendete Ausdruck "Faser" umfaßt dabei Stapelfasern und/oder kontinuierliche Filamente, die durch im Prinzip bekannte Spinnprozesse, z.B. das Trockenspinnverfahren oder das Naßspinnverfahren, sowie das Schmelzspinnen hergestellt werden können.

Die Erfindung betrifft ferner die Verwendung spezieller Magnesium-Aluminium-Hydroxy-Carbonate als Hilfs- oder Zusatzstoffe für Polymere, insbesondere für Polyurethan.

Elastische Polyurethanfasern aus langkettigen synthetischen Polymeren, die zu wenigstens 85% aus segmentierten Polyurethanen auf Basis von z.B. Polyethern, Polyestern und/oder Polycarbonaten aufgebaut sind, sind gut bekannt. Garne aus solchen Fasern werden zur Herstellung von Geweben bzw. Stoffen verwendet, die ihrerseits unter anderem für Miederwaren, Strümpfe und Sportbekleidung wie z.B. Badeanzüge bzw. Badehosen, geeignet sind. In Schwimmbädern wird das Wasser jedoch häufig aus hygienischen Gründen so stark chloriert, daß der aktive Chlorgehalt gewöhnlich zwischen 0,5 und 3 ppm (parts per million) oder sogar höher liegt. Wenn Polyurethan-Fasern einer solchen Umgebung ausgesetzt werden, kann dies zu einem Abbau bzw. einer Beeinträchtigung der physikalischen Eigenschaften, wie z. B. der Festigkeit, der Fasern und dadurch bedingt zu einem vorzeitigen Textilverschleiß führen.

In praktischer Hinsicht kann bei grobtitrigen Fasern ein gewisser Abbau der Faser toleriert werden, ohne daß seine Auswirkungen von dem Benutzer der aus diesen Fasern hergestellten Geweben bemerkt werden. Dennoch ist eine Verbesserung der Beständigkeit des Fasermaterials gegenüber einem durch Chlor induzierten Abbau notwendig, insbesondere für Garne mit einer hohen Feinheit (beispielsweise Fasern mit einem Titer von weniger als 150 Denier).

Zur Verbesserung der Chlorwasserbeständigkeit von elastischen Polyurethan-Garnen für das Einsatzgebiet Badebekleidung wurden die Polyurethane häufig aus Polyestern als niedermolekulares mono-, di- oder polyhydroxy-funktionelles Polymer hergestellt. Aliphatische Polyester zeigen jedoch eine hohe biologische Aktivität. Aus diesem Grunde haben die aus diesem Polymer hergestellten Polyurethane den Nachteil, daß sie leicht durch Mikroben und Pilze abgebaut werden. Weiterhin hat sich gezeigt, daß die Chlorwasserbeständigkeit von Polyurethanen auf Basis von Polyestern nicht zufriedenstellend ist.

Eine Vielzahl von Additiven in Elastan-Fasern wurde beschrieben, um die Chlorwasserbeständigkeit von elastischen Polyurethanfilamenten zu verbessern.

In den Schriften US 4 340 527, DE 3 124 197 und US 5 028 642 ist die Einarbeitung von Zinkoxid in Filamente aus segmentierten Polyurethanen zur Chlorstabilisierung beschrieben. Zinkoxid hat jedoch den gravierenden Nachteil, daß es während des Färbeprozesses der Gewebe, insbesondere unter sauren Bedingungen (pH 3 bis 4), aus dem Filament herausgewaschen wird. Dadurch wird die Chlorwasserbeständigkeit der Faser stark gemindert. Weiterhin werden durch die zinkhaltigen Färbeabwässer Bakterienkulturen in biologisch arbeitenden Kläranlagen abgetötet. In der Folge kann die Wirkungsweise solcher Kläranlagen erheblich beeinträchtigt werden.

In der Offenlegungsschrift JP 59-133 248 ist zur Verbesserung der Chlorwasserbeständigkeit die Einarbeitung von Hydrotalcit in Filamente aus segmentierten Polyurethanen beschrieben. Neben der schwermetallfreien Stabilisierung wird beschrieben, daß nur geringe Mengen von dispergiertem Hydrotalcit bei Färbebedingungen im sauren Bereich (pH 3 bis 4) ausgewaschen werden und somit eine gute Chlorwasserbeständigkeit erhalten bleibt. Als Nachteil zeigt sich jedoch, daß Hydrotalcit in polaren Lösungsmitteln wie Dimethylacetamid oder Dimethylformamid und sogar in Spinnlösungen für Polyurethan-Fasern stark agglomeriert. Agglomerate in Spinnlösungen für Polyurethan -Fasern führen während des Spinnprozesses rasch zu Verstopfung der Spinndüsen, wodurch der Spinnprozeß wegen häufig brechender Fasern und steigendem Druck an den Spinndüsen häufig unterbrochen werden muß. Ein Spinnen solcher PU-Zusammensetzungen über einen längeren Zeitraum ist somit gemäß diesem Verfahren nicht möglich. Zudem weisen solche Filamente keine ausreichende Beständigkeit gegen chlorhaltiges Wasser auf.

In der Offenlegungsschrift JP 3-292 364 werden mit Silanen und/oder Fettsäuren beschichtete Hydrotalcite als Additiv in Polyurethanen beschrieben. Es wurde jedoch gefunden, daß die Chlorwasserbeständigkeit der beschriebenen Spandex-Fasern nicht ausreichend ist. Weiterhin haben Silane jedoch den Nachteil, daß sie Beschichtungsmittel mit aufwendiger Herstellung sind. Ein weiterer Nachteil ist, daß die Anfärbbarkeit der beschriebenen Polyurethan-Fasern bei der Verarbeitung mit Polyamid-Hartfasern durch Säurefarbstoffe wie Telon-Farbstoffe, nicht ausreichend ist und darüberhinaus eine Ton-in-Ton-Färbung, z.B. von Mischgeweben zwischen Polyurethan-Fasern und Polyamid-Hartfasern nicht gelingt.

In der Offenlegungschrift EP 558 758 wird eine Polyurethanzusammensetzung beschrieben, die ein Kristallwasser enthaltendes Hydrotalcit mit anhaftender Fettsäure enthält. Nachteil dieser Zusammensetzung ist derselbe wie der Nachteil der bereits bei JP 3-292 364 beschriebenen Zusammensetzung, d.h. daß die Chlorwasserbeständigkeit der beschriebenen Polyurethan-Fasern noch nicht ausreichend ist, die Anfärbbarkeit der beschriebenen Polyurethan-Fasern bei der Verarbeitung mit Polyamid-Hartfasern durch Säurefarbstoffe wie Telon-Farbstoffe nicht ausreichend ist und eine Ton-in-Ton-Färbung zwischen Mischgeweben aus z.B. Polyurethan-Fasern und Polyamid-Hartfasern nicht gelingt.

Der Erfindung liegt die Aufgabe zugrunde, eine PU-Zusammensetzung insbesondere für Polyurethan-Fasern (auch Elastanfasern genannt) zur Verfügung zu stellen,
die eine gegenüber dem Stand der Technik verbesserte Chlorwasserbeständigkeit besitzt,
deren Chlorwasserstabilität bevorzugt nicht durch Zusatz von schwermetallhaltigen Additiven erzielt wird,
deren Stabilisator sowohl den Spinnprozeß als auch die physikalische Eigenschaften der Polyurethan-Faser nicht negativ beeinflußt,
deren Stabilisator insbesondere auch bei speziellen Behandlungen der Faser, wie Waschen oder Färben, nicht aus der Faser herausgewaschen oder/und unwirksam wird,
deren Anfärbbarkeit bei der Verarbeitung mit Polyamid-Hartfasern durch Säurefarbstoffe wie Telon-Farbstoffe wenigstens gleich bleibt oder sogar verbessert ist und
bei der insbesondere eine Ton-in-Ton-Färbung zwischen der Polyurethan-Faser und Polyamid-Hartfaser erreicht wird.

Die Aufgabe wird erfindungsmäßig dadurch gelöst, daß der Polyurethanzusammensetzung eine wirksame Menge fein zerteilter, mit Polyorganosiloxanen oder einer Kombination aus Polyorganosiloxan/Polyorganohydrogensiloxan beschichteter Hydrotalcite und/oder anderer basischer Metall-Aluminium-Hydroxy-Verbindungen zugesetzt werden.

Gegenstand der Erfindung sind Polyurethanzusammensetzungen und Elastanfasern mit erhöhter Chlorbeständigkeit aus insbesondere mindestens 85% segmentiertem Polyurethan, dadurch gekennzeichnet, daß die Polyurethane bzw. Polyurethan-Fasern fein zerteilte Hydrotalcite oder andere basische Metall-Aluminium-Hydroxy-Verbindungen insbesondere der allgemeinen Formel (1)

M₁₋ₓ²⁺Alₓ(OH)₂A_{x/n}ⁿ⁻ · mH₂O (1),

wobei
- M²⁺: für Magnesium oder Zink, insbesondere Magnesium steht,
- Aⁿ⁻: ein Anion mit der Valenzzahl n aus der Reihe OH⁻, F⁻, Cl⁻, Br⁻, CO₃²⁻, SO₄²⁻, HPO₄²⁻, Silikat, Acetat oder Oxalat, insbesondere CO₃²⁻ ist,
0 < x ≤ 0,5 und 0 ≤ m < 1 ist,
oder insbesondere der Formel (2)

MgₛAlₜ(OH)ᵤ(A²⁻)ᵥ· wH₂O (2)

wobei s eine Zahl von 1 bis 15, t eine Zahl von 1 bis 8, u eine Zahl von 1 bis 40, v eine Zahl von 1 bis 5 und w eine Zahl von 0 bis 20 ist und A²⁻ ein Anion aus der Reihe CO₃²⁻, SO₄²⁻, HPO₄²⁻, Silikat oder Oxalat, insbesondere CO₃²⁻, ist,
enthalten,
wobei die Hydrotalcite oder basischen Metall-Aluminium-Hydroxy-Verbindungen mit 0,1 bis 30 Gew.-%, insbesondere mit 0,5 bis 25 Gew.-% Polyorganosiloxanen und/oder Polyorganohydrogensiloxanen beschichtet sind.

Basische Metall-Aluminium-Hydroxy-Verbindungen im Sinne der Erfindung sind Mischsalze auf Basis eines zweiwertigen Metallions, insbesondere von Mg oder Zn, besonders bevorzugt von Mg, und Aluminium als dreiwertigem Kation, dem Hydroxyanion und einem weiteren ein- oder zweiwertigen Anion, insbesondere OH⁻, F⁻₁, Cl⁻, Br⁻, CO₃²⁻, SO₄²⁻, HPO₄²⁻, Silikat, Acetat oder Oxalat.

Die Menge des Hydrotalcits und/oder basichen Metall-Aluminium-Hydroxy-Verbindung, die in der Polyurethanzusammensetzung oder den daraus herstellbaren Filamenten fein verteilt enthalten ist, beträgt insbesondere von 0,05 Gew.-% bis 15 Gew.-%, vorzugsweise von 0,1 Gew.-% bis 5 Gew.-% und besonders bevorzugt von 0,3 Gew.-% bis 4 Gew.-%, bezogen auf das Gewicht des Polymeren. Bei den Elastanfilamenten kann die Menge innerhalb der Filamente und/oder auf der Filamentoberfläche verteilt sein.

Bei den Hydrotalciten oder Metall-Aluminium-Hydroxy-Verbindungen handelt es sich insbesondere bevorzugt um solche, wie sie z.B. in den Formeln (3) und (4) gezeigt sind:

Mg₅Al₃(OH)₁₅(A²⁻)₂· wH₂O (3);

Mg₆Al₂(OH)₁₂(A²⁻)₃· wH₂O (4).

in denen A²⁻ und w die oben zu Formel (2) angegebene Bedeutung haben.

Magnesiumverbindungen sind bevorzugt wegen der oben genannten Abwasserproblematik beim Färben von Zn-haltigen Fasern.

Besonders bevorzugte Beispiele der Hydrotalcite oder basischer Magnesium-Aluminium-Hydroxy-Carbonate sind solche mit den Formeln (5), (6) und (7):

Mg₆Al₂(OH)₁₆CO₃·5H₂O (5);

Mg₄Al₂(OH)₁₂CO₃·4H₂O (6);

Mg₆Al₂(OH)₁₂(CO₃)₃·7H₂O (7).

Die beschriebenen Polyorganosiloxane werden zur Hydrophobierung der Hydrotalcite oder Metall-Aluminium-Hydroxy-Verbindungen mit einem Gehalt von 0,1 bis 30 Gew.-% bezogen auf das Hydrotalcit bzw. die Metall-Aluminium-Hydroxy-Verbindung eingesetzt. Bevorzugt sind Polyorganosiloxane der allgemeinen Formel (8):

(R⁵)₃SiO-(-SiR¹R⁴O-)ₓ-(-SiR²R⁷O-)_{y}-(-SiR³HO-)_{z}-Si(R⁶)₃ (8),

wobei
x eine Zahl von 0 - 500, y eine Zahl von 0 - 300 und z eine Zahl von 0 - 300,
die Reste R¹, R², R³, R⁴, R⁵ und R⁶ unabhängig voneinander für einen gesättigten und/oder ungesättigten, gegebenenfalls auch verzweigten Alkylrest mit 1 bis 4 C-Atomen und/oder für einen Arylrest mit 6 bis 9 C-Atomen stehen, der gegebenenfalls auch alkylsubstituiert ist und

- R⁷: für einen Alkylrest mit 6 bis 18 C-Atomen oder für Wasserstoff steht.

Besonders vorteilhafte Eigenschaften haben Polysiloxane der Formel (8) wenn in der allgemeinen Formel (8) die Reste R¹, R², R³, R⁴, R⁵ und R⁶ für die Methylgruppe stehen.

Besonders bevorzugt werden Hydrotalcite und/oder Metall-Aluminium-Hydroxy-Verbindungen eingesetzt, beschichtet mit Polyorganosiloxanen der Formel (8) in der x eine Zahl von 0 bis 100, y eine Zahl von 0 bis 100 und z eine Zahl von 0 bis 100, bedeutet, wobei x + y + z für eine Zahl von 25 bis 300 steht.

Ebenfalls bevorzugt sind Polyorganosiloxane wenn in der allgemeinen Formel (8) für die Polyorganosiloxane x = 0, y = 5 bis 50 und z = 5 bis 60, wobei y + z größer als 15 ist.

Weiterhin bevorzugt sind Polyorganosiloxane der allgemeinen Formel in der x eine Zahl von 3 bis 500, y = 0 und z = 0 ist.

In den Endgruppen können die Reste R⁵ und R⁶ jeweils auch für unterschiedliche Substituenten stehen, was bedeutet, daß an endständigen Siliciumatomen auch unterschiedliche Substituenten gebunden sein können.

Die Reste R⁷ können geradkettig und/oder verzweigte Alkylreste sein. Beispiele für geradkettige Reste R⁷ sind Hexyl-, Octyl-, Nonyl-, Decyl-, Dodecyl- und Tetradecylreste, Beispiele für verzweigte Alkylreste sind 3-Methylpentyl-, 2,3-Dimethylbutyl-, 3-Butylhexyl- und 4-Propyloctylreste. Dabei können die Polyorganosiloxane jeweils gleiche oder unterschiedliche Reste R⁷ enthalten. Bevorzugte Alkylreste R⁷ sind der Dodecyl- und Tetradecylrest, insbesondere auch Gemische aus Verbindungen mit beiden Resten.

Bevorzugte Polyorganohydrogensiloxane sind solche der Formeln 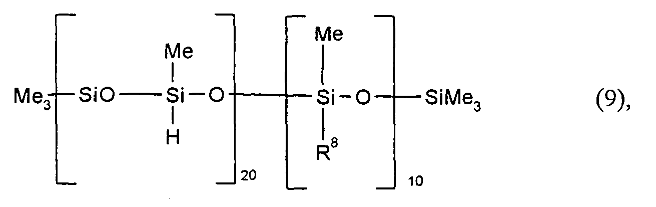 worin der Rest R⁸ C₁₂H₂₅ und/oder C₁₄H₂₉ bedeutet und

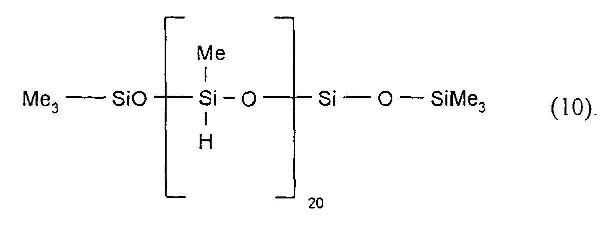

Bevorzugte Polyorganosiloxane sind solche der Formeln 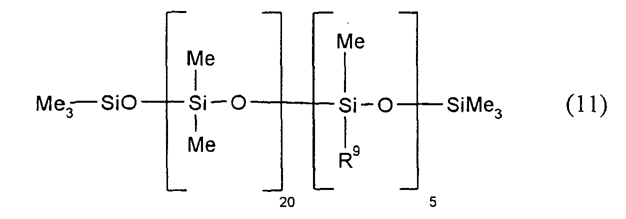 worin der Rest R⁹ C₁₂H₂₅ und/oder C₁₄H₂₇ bedeutet und

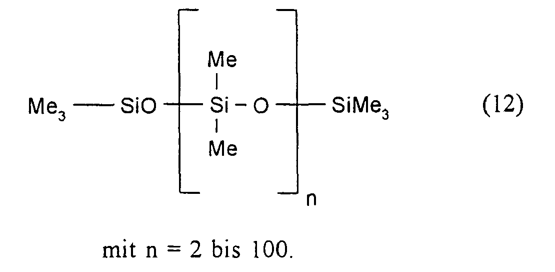

Bei Verwendung der bloßen Polyorganosiloxane zur Beschichtung wirken sich hestellungsbedingte Reste von direkt an Si gebundenem Wasserstoff günstig auf das Agglomerationsverhalten der Hydrotalcite aus.

Weiterer bevorzugter Gegenstand der Erfindung sind ferner Elastan-Fasern mit Metall-Aluminium-Hydroxyverbindungen, die mit einer Mischung der obengenannten Polyorganosiloxane und Polyorganohydrogensiloxanen der allgemeinen Formel (13):

(R²)₃SiO-(-SiR¹HO-)ₘ-Si(R³)₃ (13),

beschichtet sind, wobei in der allgemeinen Formel (13) m eine Zahl von 5 bis 200 und die Reste R¹, R², R³ unabhängig voneinander die bei der Definition der Reste von Formel (8) genannten Bedeutung haben und wobei Polyorganosiloxane und Polyorganohydrogensiloxane bevorzugt im Gewichtsverhältnis 4 : 1 bis 1 : 4 vorliegen.

Bevorzugt sind solche Hydrotalcite und/oder basische Metall-Aluminium-Hydroxy-Verbindungen, die mit 0,05 bis 25 Gew.-% Polyorganosiloxan oder der Mischung von Polyorganosiloxan und Polyorganohydrogensiloxan, bezogen auf die Menge Hydrotalcit oder Metall-Aluminium-Hydroxy-Verbindung, beschichtet sind Insbesondere werden bevorzugt Hydrotalcite und/oder Metall-Aluminium-Hydroxy-Verbindungen eingesetzt, die mit von 0,5 bis 10 Gew.-% Polyorganosiloxan oder der Mischung Polyorganosiloxan/Polyorganohydrogensiloxan beschichtet sind.

Die Beschichtung der Hydrotalcite und/oder basischen Metall-Aluminium-Hydroxy-Verbindungen kann durch Aufsprühen und/oder Untermischen des Polyorganosiloxans oder der Mischung Polyorganosiloxan/ Polyorganohydrogensiloxan gemeinsam oder getrennt in beliebiger Reihenfolge vorzugsweise vor und/oder während einer abschließenden Mahlung des Hydrotalcits erfolgen.

Es ist dabei gleichgültig, ob das Polyorganosiloxan oder die Mischung von Polyorganosiloxan/Polyorganohydrogensiloxan den bei der Herstellung der Hydrotalcite und/oder basischen Metall-Aluminium-Hydroxy-Verbindungen anfallenden feuchten Filterkuchen, Pasten oder Aufschlämmungen vor der Trocknung zugemischt wird oder ob es dem trockenen Gut unmittelbar vor der abschließenden Mahlung in geeigneter Weise, beispielsweise durch Aufsprühen beigegeben oder, im Falle einer Dampfstrahltrocknung, dem Dampf unmittelbar bei der Einspeisung in die Strahlmühle zugesetzt wird. Das Polyorganosiloxan oder die Mischung Polyorganosiloxan/Polyorganohydrogensiloxan kann gegebenenfalls vor der Zugabe in eine Emulsion überführt werden.

Die Herstellung der Hydrotalcite oder der Metall-Aluminium-Hydroxy-Verbindungen erfolgt beispielsweise nach grundsätzlich bekannten Verfahren. Solche Verfahren sind z.B. beschrieben in den Offenlegungsschriften EP 129 805-A1 oder EP 117 289-A1.

Bevorzugt erfolgt die Herstellung der Hydrotalcite und/oder z.B. von Magnesium-Aluminium-Hydroxy-Carbonaten aus ihren Ausgangsverbindungen z.B. aus MgCO₃, Al₂O₃ und Wasser in Anwesenheit eines Lösungsmittels wie z. B. Wasser, eines C₁-C₈-Alkohol oder von chlorierten Kohlenwasserstoffen mit anschließender Trocknung durch z. B. Sprühtrocknung und Mahlung durch z.B. eine Perlmühle.

Besonders bevorzugt erfolgt die Beschichtung der Hydrotalcite und/oder basischen Metall-Aluminium-Hydroxy-Verbindungen durch Mahlung mit z.B. einer Perlmühle in Anwesenheit von Lösungsmitteln wie z.B. Dimethylacetamid, Dimethylformamid oder Dimethylsulfoxid, wie sie auch bei der Herstellung des Polyurethans eingesetzt werden können. Das zur Beschichtung eingesetzte Polyorganosiloxan oder die Mischung Polyorganosiloxan/Polyorganohydrogensiloxan kann dabei dem Mahlgut in geeigneter Weise zugesetzt werden oder, wie bereits oben beschrieben, dem Hydrotalcit und/oder der Metall-Aluminium-Hydroxy-Verbindung vor oder bei der Trocknung zugesetzt werden. Bei der Mahlung werden insbesondere mittlere Korngrößen der beschichteten Hydrotalcite oder basischen Metall-Aluminium-Hydroxy-Verbindungen mit einem mittleren Durchmesser (Zahlenmittel) von 10µm und weniger erreicht, bevorzugt kleiner als 5µm und besonders bevorzugt kleiner als 2µm. Diese Korngrößen werden durch Verarbeitung der Hydrotalcite und/oder basischen Metall-Aluminium-Hydroxy-Verbindungen durch die bereits oben genannten Verfahren erreicht.

Die Hydrotalcite und/oder basischen Metall-Aluminium-Hydroxy-Verbindungen können an beliebiger Stelle bei der Herstellung von Polyurethan-Fasern dem Polyurethan zugesetzt werden. Beispielsweise können die Hydrotalcite und/oder Metall-Aluminium-Hydroxy-Verbindungen in Form einer Lösung oder Aufschlämmung zu einer Lösung oder Dispersion von anderen Faser-Zusätzen hinzugefügt und dann in Bezug auf die Faserspinndüsen stromaufwärts mit der Polymerlösung vermischt oder in diese eingespritzt werden. Natürlich können die Hydrotalcite und/oder Metall-Aluminium-Hydroxy-Verbindungen auch getrennt zu der Polymerspinnlösung als trockene Pulver oder als Aufschlämmung in einem geeigneten Medium hinzugefügt werden. Die Hydrotalcite und/oder basischen Metall-Aluminium-Hydroxy-Verbindungen können weiterhin in den oben genannten Formulierungen bei der Polymerherstellung zugesetzt werden.

Die erfindungsgemäßen Polyurethane oder Polyurethan-Fasern können eine Vielzahl von verschiedenen Zusätzen für verschiedene Zwecke enthalten, wie beispielsweise Mattierungsmittel, Füllstoffe, Antioxidantien, Farbstoffe, Anfärbemittel, Stabilisatoren gegen Wärme, Licht, UV-Strahlung und Dämpfe, usw., wobei diese Zusätze so dosiert werden, daß sie keine den Hydrotalciten und/oder Metall-Aluminium-Hydroxy-Verbindungen entgegengesetzte Wirkungen zeigen.

Wenn die mit den erfindungsgemäßen Fasern hergestellten textilen Waren appretiert oder gefärbt werden, ist insbesondere darauf zu achten, daß eine Deaktivierung oder Auslösung der Hydrotalcite und/oder Metall-Aluminium-Hydroxy-Verbindungen aus der Faser vermieden wird.

Die durch die Hydrotalcite und/oder Metall-Aluminium-Hydroxy-Verbindung stabilisierten Polyurethane können neben der Verarbeitung zu Fasern auch für Formkörper, Filme, Elastomere, Schäumungsmittel u.s.w. eingesetzt werden.

Hydrotalcite und/oder basische Metall-Aluminium-Hydroxy-Verbindungen agglomerieren unter Umständen in polaren Lösungsmitteln wie z.B. Dimethylacetamid, Dimethylformamid oder Dimethylsulfoxid, die im Trocken- oder Naßspinnprozeß zur Herstellung von Fasern aus Polyurethanen üblicherweise eingesetzt werden. Weiterhin tritt auch Agglomeration in lösungsmittelfreien Polymerschmelzen auf, die zur Herstellung von schmelzgesponnenen elastischen Fasern eingesetzt werden. Aus diesem Grund können bei Spinnlösungen mit eingearbeiteten Hydrotalciten und/oder Metall-Aluminium-Hydroxy-Verbindungen während des Spinnprozesses Schwierigkeiten durch Verstopfungen der Spinndüsen auftreten, woraus ein stark ansteigender Düsendruck resultiert und es zum häufigen Abriß von Fasern kommt. Bei Einarbeitung der Hydrotalcite und/oder Metall-Aluminium-Hydroxy-Verbindungen in Polyurethanlösungen entsprechend der Erfindung tritt keine Agglomeration in der Spinnlösung oder Polymerschmelze auf und die mittlere Korngröße der Hydrotalcite und/oder basischen Magnesium-Aluminium-Hydroxy-Carbonate bleibt nahezu unverändert

Demzufolge ist auch die Beständigkeit so erhaltener Filamente gegen einen durch chlorhaltiges Wasser induzierten Abbau verbessert im Vergleich zu Fasern, die aus agglomerathaltigen Spinnlösungen oder Polymerschmelzen erhalten werden.

Gegenstand der Erfindung ist auch ein Verfahren zur Herstellung von Polyurethan-Fasern, bei dem ein langkettiges synthetisches Polymer als thermoplastisches Polyurethan in der Schmelze versponnen wird oder ein Polymer mit wenigstens 85% segmentiertem Polyurethan in einem organischen Lösungsmittel wie Dimethylacetamid, Dimethylformamid oder Dimethylsulfoxid mit einem Anteil von 15 bis 50 Gew.-% in Bezug auf das Polyurethan, vorzugsweise mit einem Anteil von 20 bis 45 Gew.-% in Bezug auf das Polyurethan gelöst, und diese Lösung dann durch Spinndüsen zu Filamenten durch einen Trocken- oder Naßverspinnprozeß wird, wobei eine wirksame Menge der Hydrotalcite und/oder Metall-Aluminium-Hydroxy-Verbindungen von 0,05 Gew.-% bis 15 Gew.-%, vorzugsweise eine Menge von 0,1 Gew.-% bis 5 Gew.-% und besonders bevorzugt eine Menge von 0,3 Gew.-% bis 4 Gew.-%, bezogen auf das Gewicht des Polymeren, innerhalb der Filamente und/oder auf der Filamentoberfläche verteilt wird. Werden weniger als 0,05 Gew.-% der Hydrotalcite und/oder basischen Metall-Aluminium-Hydroxy-Verbindungen innerhalb des Filamentes oder auf der Filamentoberfläche verteilt, ist die Wirksamkeit gegen den Abbau des Polymeren durch Chlor unter Umständen weniger zufriedenstellend. Die Dispergierung von wesentlich mehr als 15 Gew.-% der Hydrotalcite und/oder Metall-Aluminium-Hydroxy-Verbindungen innerhalb des Filamentes oder auf der Filamentoberfläche kann zu nachteiligen physikalischen Eigenschaften der Fasern führen und ist daher weniger empfehlenswert.

Bevorzugt werden die für die erfindungsgemäßen Polyurethanzusammensetzung besonders geeigneten Hydrotalcite und/oder Metall-Aluminium-Hydroxy-Verbindungen wie oben beschrieben im Verfahren eingesetzt.

Die verbesserten erfindungsgemäßen Polyurethan-Fasern bestehen aus segmentierten Polyurethanpolymeren, wie beispielsweise solchen, die auf Polyethern, Polyestern, Polyetherestern, Polycarbonaten, und dergleichen basieren. Derartige Fasern können nach grundsätzlich bekannten Verfahren hergestellt werden, wie beispielsweise nach denjenigen, die in den US-Patenten 2 929 804, 3 097 192, 3 428 711, 3 553 290 und 3 555 115 oder in der Schrift WO 9 309 174 beschrieben werden. Ferner können die Polyurethan-Fasern aus thermoplastischen Polyurethanen, deren Herstellung beispielsweise in DE 4 414 327 beschrieben ist, bestehen. Einige von diesen Polymeren sind gegenüber einem durch Chlor induzierten Abbau empfindlicher als andere. Dies ist beispielsweise durch einen Vergleich der Ergebnisse in dem nachstehenden Beispiel 1 ersichtlich. Demnach sind Polyurethan-Fasern aus einem auf Polyether basierenden Polyurethan wesentlich empfindlicher als Polyurethan-Fasern aus einem auf Polyester basierenden Polyurethan. Wie in diesem Beispiel gezeigt wird, profitieren insbesondere Polyurethan-Fasern, auf Basis von Polyether mehr als andere, von einem Zusatz der Hydrotalcite und/oder basischen Metall-Aluminium-Hydroxy-Verbindungen. Aus diesem Grunde sind Polyurethan-Zusammensetzungen und -Fasern besonders bevorzugt, die auf Polyether basierende Polyurethane umfassen.

Bei den Hydrotalciten oder auch bei basischen Magnesium-Aluminium-Hydroxy-Verbindungen handelt es sich um Additive, die kein Schwermetall enthalten und aus toxikologischer Sicht unbedenklich sind und daher bevorzugt werden. Dadurch kann gewährleistet werden, daß bei der Weiterverarbeitung der Elastan-Fasern wie z.B. der Färbung keine Abwasser entstehen, die die Funktionsweise einer biologisch arbeitenden Kläranlage mindern oder zerstören.

Durch die Einarbeitung der Hydrotalcite und/oder Metall-Aluminium-Hydroxy-Verbindungen wird weiterhin, wie im nachstehenden Beispiel 2 gezeigt, besonders überraschend gefunden, daß die Anfärbbarkeit der Elastan-Faser durch Säurefarbstoffe wie Telon-Farbstoffe verbessert und eine gute Ton-in-Ton-Färbung zwischen Elastan- und Polyamid-Faser bei der Verarbeitung mit Polyamid-Hartfasern erreicht werden kann. Das ist besonders wichtig, wenn textile Waren eines Gemisches aus Elastan- und Polyamid-Fasern dunkel angefärbt werden sollen. Zusätzlich ist es möglich, den Färbeprozeß schneller durchzuführen und/oder mit weniger Farbstoff in Färbebädern auszukommen. Gleichzeitig ist das Färbeergebnis von höherer Qualität, da die Elastan-Faser einen höheren Grad der Anfärbung bekommt und die Ton-in-Ton-Färbung mit Polyamid verbessert ist.

Die Polyurethane, zu denen auch segmentierte Polyurethane gehören, werden grundsätzlich insbesondere aus einem linearen Homo- oder Copolymer mit je einer Hydroxygruppe am Ende des Moleküls und einem Molekulargewicht von 600 bis 4000, z. B. aus der Gruppe der Polyesterdiole, Polyetherdiole, Polyesteramidodiole, Polycarbonatdiole, Polyacryldiole, Polythioesterdiole, Polythioetherdiole, Polyhydrocarbondiole oder einer Mischung oder Copolymeren von Verbindungen dieser Gruppe, hergestellt. Weiterhin basiert das Polyurethan insbesondere auf organischen Diisocyanaten und Kettenverlängerern mit mehreren aktiven Wasserstoffatomen, wie z. B. Di- und Polyolen, Di- und Polyaminen, Hydroxylaminen, Hydrazinen, Polyhydraziden, Polysemicarbaziden, Wasser oder eine Mischung aus diesen Komponenten.

Weiterer Gegenstand der Erfindung sind textile Waren, insbesondere Strick-, Wirk- oder Webwaren, hergestellt unter Verwendung der erfindungsgemäßen Polyurethanfasern, bevorzugt in Mischung mit synthetischen Hartfasern wie Polyamid-, Polyester- oder Polyacrylfasern und/oder Naturfasern wie Wolle, Seide oder Baumwolle.

Die nachfolgend beschriebenen Testverfahren werden zum Messen der verschiedenen Parameter verwendet, die für die Beurteilung der Vorteile der Erfindung benötigt werden.

Zur Bestimmung der Höchstzugkraftdehnung und der Feinheitsfestigkeit wird ein einfacher Zugversuch am Elastan-Filamentgarn im klimatisierten Zustand durchgeführt. Die Prüfmethode wird in Anlehnung an DIN 53834 Teil 1 durchgeführt. Der vorbereitete Prüfling wird in einer Schlinge um den Haken des Meßkopfes und um eine 10 mm Umschlingungsklemme mit einer Vorspannkraft von 0,001 cN/dtex gelegt. Die Einspannlänge beträgt 200 mm. Ein aus Alufolie bestehendes Fähnchen wird genau auf der Höhe der Lichtschranke eingehängt. Der Schlitten fährt mit einer Verformungsgeschwindigkeit von 400 %/Minute (800 mm Abzug) bis zum Bruch des Fadens und nach der Messung wieder in seine Ausgangsstellung zurück. Pro Prüfling werden 20 Messungen gemacht.

Um die Beständigkeit der Elastan-Fasern gegenüber einem durch Chlor induzierten Abbau zu testen, wird eine 60 cm lange Garnprobe (beispielsweise 4-filamentig, Gesamttiter 40 Denier), die aus den Fasern hergestellt worden ist, einem "Chlorwasserechtheitstest" in Anlehnung an DIN 54019 unterzogen. Bei diesem Test wird das Garn spannungsfrei mit einer Länge von 60 cm auf speziellen Probenhaltern befestigt. Vor dem eigentlichen "Chlorwasserechtheitstest" wird eine Blindfärbung bei pH 4,5 (Acetatpuffer) bei 98°C über eine Stunde durchgeführt. Die Probe wird dann bei Raumtemperatur 5 und 10 mal jeweils für eine Stunde im Dunkeln in der Prüflösung, bestehend aus einer Pufferlösung (51,0 ml 1,0 N NaOH, 18,6g KCl und 15,5g Borsäure werden in destilliertem Wasser gelöst und auf 1000 ml aufgefüllt) und Chlorlauge, mit einem Chlorgehalt von 20 mg/l bei pH 8,5 behandelt. Nach jeder Behandlung wird die Probe mit destilliertem Wasser gewaschen und an der Luft getrocknet. Nach Abschluß der 5 bzw. 10 maligen Behandlung werden die physikalischen Eigenschaften der Probe so gemessen, wie dies in vorstehenden Absätzen beschrieben wurde. Das Verhalten der Garne bei diesem "Chlorbadewassertest" entspricht dem Verhalten von entsprechenden Garnen in Schwimmbekleidungsgeweben, die den in Schwimmbädern vorhandenen Chlor ausgesetzt werden.

Die Chlorkonzentration in dem "chlorierten" Wasser wird hier definiert als diejenige Chlorkonzentration, die in der Lage ist, Jodidionen zu Jod zu oxidieren. Diese Konzentration wird mit einer Kaliumjodid, Natriumthiosulfat-Titration gemessen und als ppm "aktives Chlor" (Cl₂) pro Liter Prüflösung angegeben. Das Titrationsverfahren wird so durchgeführt, daß man 1 g Kaliumjodid, 2 ml Phosphorsäure (85%ig) und 1 ml einer 10%igen Stärkelösung zu 100 ml chloriertem Wasser, das analysiert werden soll, hinzufügt und die Mischung bis zu einem Stärke/Jod-Endpunkt mit 0,1 N Natriumthiosulfatlösung titriert.

Der Grad der Anfärbbarkeit von Spandex-Fasern durch Säurefarbstoffe und die Güte der Ton-in-Ton-Färbung von Spandex- und Polyamid-Fasern bei der Verarbeitung mit Polyamid-Hartfasern wird durch ein Spektralfotometer vom Typ Datacolor 3890 gemessen. Die Kalibrierung erfolgt durch einen Weißstandard (Bariumsulfat-Kachel), die Bestimmung der Farbdifferenzen durch das Cie-Lab Farbensystem.

Die Erfindung wird nachfolgend durch Beispiele, die jedoch keine Beschränkung darstellen, weiter erläutert, wobei alle Prozentangaben sich auf das Gesamtgewicht der Faser beziehen, sofern nichts anderes angegeben wird.

### Beispiele:

In den Beispielen 1 bis 3 wurden Elastan-Fasern aus einem Polyetherdiol, bestehend aus Polytetrahydrofuran (PTHF) bzw. aus einem Polyesterdiol, bestehend aus Adipinsäure, Hexandiol und Neopentylglykol, mit einem durchschnittlichen Molekulargewicht von 2000 hergestellt. Die Diole wurde mit Methylen-bis(4-phenyldiisocyanat) (MDI) mit einem molaren Verhältnis von 1 zu 1,7 gekappt und dann mit einem Gemisch aus Ethylendiamin (EDA) und Diethylamin (DEA) in Dimethylacetamid kettenverlängert.

Danach wurde den Polymeren ein Stammansatz von Additiven beigemischt. Dieser Stammansatz bestand aus 62,6 Gew.-% Dimethylacetamid (DMAC), 10,3 Gew.-% Cyanox 1790 (Fa. American Cyanamid; Stabilisator), 27,0 Gew.-% 30%iger Spinnlösung und 0,001 Gew.-% des Farbstoffs Makrolexviolett (Fa. Bayer AG). Dieser Stammansatz wurde der Spinnlösung so zugefügt, daß in der fertigen Faser der Gehalt an Cyanox 1790 1 Gew.-% bezogen auf den Feststoff des Faserpolymeren betrug.

Dieser Spinnlösung wurde ein zweiter Stammansatz zugemischt, bestehend aus 30,9 Gew.-% Titandioxid Typ RKB 2 (Fa. Bayer AG), 44,5 Gew.-% DMAC und 24,6 Gew.-% 22%iger Spinnlösung, in der Art, daß in der fertigen Faser ein Titandioxidgehalt von 0,05 Gew.-% bezogen auf das Polyurethan-Harnstoff-Polymere resultierte.

Dieser Spinnlösung wurde ein dritter Stammansatz zugemischt, bestehend aus 13,8 Gew.-% der in Tabelle 1 angegebenen Hydrotalcite und/oder Metall-Aluminium-Hydroxy-Verbindungen, 55,2 Gew.-% Dimethylacetamid und 31,0 Gew.-% 30%ige Spinnlösung, in der Art, daß in der fertigen Faser der in Tabelle 1 angegebene Gehalt an Hydrotalciten und/oder Metall-Aluminium-Hydroxy-Verbindungen bezogen auf das Polyurethan-Harnstoff-Polymere resultierte.

Dieser Spinnlösung wurde nun ein weiterer Stammansatz zugemischt. Er bestand aus 5,4 Gew.-% Magnesium-Stearat, 45,0 Gew.-% DMAC und 49,6 Gew.-% 30%iger Spinnlösung und wurde so zugesetzt, daß ein Magnesium-Stearat-Gehalt von 0,20 Gew.-% bezogen auf den Feststoff der Faserpolymeren resultierte.

Die fertige Spinnlösung wurde durch Spinndüsen in einer typischen Spinnapparatur zu Filamenten mit einem Titer von 10 dtex trocken versponnen, wobei jeweils vier Einzelfilamente zu koaleszierenden Filamentgarnen zusammengefaßt wurden. Die Faserpräparation, bestehend aus Polydimethylsiloxan mit einer Viskosität von 10 mPas/25°C und wurde über eine Präparationswalze aufgetragen, wobei ca. 4 Gew.-% bezogen auf das Gewicht der Faser appliziert wurden. Die Faser wurde anschließend mit einer Geschwindigkeit von 900 m/min aufgewickelt.

### Beispiel 1:

Die Testergebnisse der Messungen zur Beständigkeit von Elastan-Fasern gegenüber einem durch Chlor induzierten Abbau sind in Tabelle 1 gezeigt. Dabei wurden Polyurethane auf Basis von Polyethern und Polyestern eingesetzt, ebenso unterschiedliche Stabilisatoren und Beschichtungsmittel. Es zeigt sich, daß insbesondere bei den erfindungsgemäßen Proben 1-5, 1-9 und 1-11 der höchste Prozent-Anteil der ursprünglichen Höchstzugkraft erhalten bleibt. Somit ist bei diesen Proben die Stabilität gegen Chlorwasser wie gewünscht sehr gut.

### Beispiel 2:

Zur Prüfung der Anfärbbarkeit wurden die in Tabelle 2 und 3 genannten Elastan-Fasern zusammen mit Polyamid im Verhältnis 20:80 jeweils getrenntbadig mit Säurefarbstoffen nach der dort genannten Färberezepturen gefärbt.

Alle Färbungen wurden im Turbomat (Fa. Ahiba) bei einem Flottenverhältnis von 1:40 durchgeführt.

Der Grad der Anfärbbarkeit von Elastan-Fasern und die Güte der Ton-in-Ton-Färbung bei der Verarbeitung von Elastan-Fasern mit Polyamid-Hartfasern durch Säurefarbstoffe wurde durch ein Spektralfotometer vom Typ Datacolor 3890 gemessen. Die Gerätekalibrierung erfolgte durch einen Weißstandard (Bariumsulfat-Kachel), die Bestimmung der Farbdifferenzen durch das Cielab-Farbensystem.

Die Güte der Anfärbbarkeit ist in Tabelle 2 durch die Gesamtdifferenz DE* angegeben. Je weiter DE* von der Referenzprobe in den positiven Bereich abweicht, desto besser ist die Anfärbbarkeit der untersuchten Probe. Eine gewünschte gute Anfärbbarkeit trifft somit insbesondere für die Proben 2-4 und 2-5 zu.

Die Güte der Ton-in-Ton-Färbung ist in Tabelle 3 ebenfalls durch die Gesamtdifferenz DE* angegeben. Je geringer die Differenz von DE* zwischen der Probe und der Referenzprobe ist, desto besser ist die Ton-in-Ton-Färbung der untersuchten Probe. Eine gute und erwünschte Ton-in-Ton-Färbung trifft somit insbesondere für die Proben 3-4 und 3-5 zu.

**Tabelle 1**

| Probe | Stabilisator | Zugesetzte Menge Stabilisator (%) | Beschichtung mit (Gew.-% in Bezug Stabilisator) | Konzentration an Chlor (mg/l) | Einwirkungszeit (h) | Höchstzugkranftdehung (%) | Höchstzugkraft (cN) | Prozent-Anteil der ursprünglichen Höchstzugkraft |
|---|---|---|---|---|---|---|---|---|
| 1-1 | - | - | - | 0 | 0 | 534 | 65 | |
| | | | | 20 | 5 x 1 | 319 | 10 | 15 |
| | | | | 20 | 10 x 1 | 0 | 0 | 0 |
| 1-2 | Zinkoxid | 3 | - | 0 | 0 | 568 | 63 | |
| | | | | 20 | 5 x 1 | 528 | 27 | 43 |
| | | | | 20 | 10 x 1 | 0 | 0 | 0 |
| 1-3 | Mg₆Al₂(OH)₁₆CO₃ x 5H₂O | 3 | 2% Stearinsäure | 0 | 0 | 549 | 60 | |
| | | | | 20 | 5 x 1 | 561 | 38 | 63 |
| | | | | 20 | 10 x 1 | 504 | 29 | 48 |
| 1-4 | Mg₆Al₂(OH)₁₆CO₃ x 5H₂O | 2 | 5% Baysilone-Öl MH 15 | 0 | 0 | 573 | 58 | |
| | | | | 20 | 5 x 1 | 533 | 32 | 55 |
| | | | | 20 | 10 x 1 | 462 | 21 | 36 |
| 1-5 | Mg₆Al₂(OH)₁₆CO₃ x 5H₂O | 3 | 5% Baysilone-Öl MH 15 | 0 | 0 | 553 | 60 | |
| | | | | 20 | x 5 x 1 | 549 | 55 | 92 |
| | | | | 20 | 10 x 1 | 516 | 46 | 77 |
| 1-6 | Mg₆Al₂(OH)₁₆CO₃ x 5H₂O | 3 | 5% Baysilone-Öl AC 3303 | 0 | 0 | 565 | 66 | |
| | | | | 20 | 5 x 1 | 572 | 54 | 82 82 |
| | | | | 20 | 10 x 1 | 573 | 47 | 71 |
| 1-7 | Mg₆Al₂(OH)₁₆CO₃ x 5H₂O | 3 | 5% Baysilone-Öl GPW 2233 | 0 | 0 | 595 | 61 | |
| | | | | 20 | 5 x 1 | 597 | 45 | 74 |
| | | | | 20 | 10 x 1 | 603 | 42 | 69 |
| 1-8 | Mg₆Al₂(OH)₁₂(CO₃)₃ x 5H₂O | 3 | - | 0 | 0 | 597 | 63 | |
| | | | | 20 | 5 x 1 | 554 | 42 | 67 |
| | | | | 20 | 10 x 1 | 564 | 39 | 62 |
| 1-9 | Mg₆Al₂(OH)₁₂(CO₃)₃ x 5H₂O | 3 | 5% Polydimethylsiloxan | 0 | 0 | 585 | 64 | |
| | | | | 20 | 5 x 1 | 567 | 56 | 88 88 |
| | | | | 20 | 10 x 1 | 557 | 50 | 78 |
| 1-10* | - | - | - | 0 | 0 | 465 | 63 | |
| | | | | 20 | 5 x 1 | 359 | 28 | 44 |
| | | | | 20 | 10 x 1 | 304 | 13 | 21 |
| 1-11* | Mg₆Al₂(OH)₁₆CO₃ x 5H₂O | 3 | 5% Baysilone-Öl MH 15 | 0 | | 466 | 68 | |
| | | | | 20 | | 454 | 60 | 88 |
| | | | | 20 | | 380 | 51 | 75 |

| | | | | | | | | |
|---|---|---|---|---|---|---|---|---|
| * Polymer auf Basis von Polyester | | | | | | | | |

**Tabelle 2**

| Probe a) | Stabilisator | Zugesetzte Menge Stabilisator (%) | Beschichtung mit (Gew.-% in Bezug Stabilisator | Färbung | Gesamtdifferenz DE* b) |
|---|---|---|---|---|---|
| 2-1 | - | - | - | c) | 0 (Referenzprobe) |
| | | | | d) | 0 (Referenzprobe) |
| 2-2 | Zinkoxid | 3 | - | c) | 3,1 |
| | | | | d) | 2,1 |
| 2-3 | Mg₆Al₂(OH₁₆CO₃ x 5 H₂O | 3 | 2% Stearinsäure | c) | 1,5 |
| | | | | d) | 0,6 |
| 2-4 | Mg₆Al₂(OH)₁₆CO₃ x 5H₂O | 3 | 5% Baysilone-Öl GPW 2233 | c) | 14,7 |
| | | | | d) | 12,9 |
| 2-5 | Mg₆Al₆(OH)₁₆(CO₃)₃ x 5H₂O | 3 | 5% Polydimethylsiloxan | c) | 17,1 |
| | | | | d) | 18,3 |

| | | | | | |
|---|---|---|---|---|---|
| a) Die Polyurethane sind auf Basis von Polyethern aufgebaut; | | | | | |
| b) Lichtart: D 65 = Tageslichtlampe; | | | | | |
| c) 0,31% Telongelb 3 RL; 0,32% Telonrot FRL; 0,24% Telonblau BRL; 2,0% Levegal FTS; pH 5,0; 98°C/60 min; | | | | | |
| d) 0,13% Telonorange AGT; 0,22% Telonrubin A5B; 0,20% Telonblau AFN; 1,0% Levegal FTS; 0,5% Avolan IS; pH 5,5; 98°C/60 min. | | | | | |

**Tabelle 3**

| Probe a) | Stabilisator | Zugesetzte Menge Stabilisator (%) | Beschichtung mit (Gew.-% in Bezug Stabilisator | Färbung | Gesamtdifferenz DE* b) |
|---|---|---|---|---|---|
| Polyamid | | | | c) | 0 (Referenzprobe) |
| | | | | d) | 0 (Referenzprobe) |
| 3-1 | - | - | - | c) | 37,8 |
| | | | | d) | 44,4 |
| 3-2 | Zinkoxid | 3 | - | c) | 34,6 |
| | | | | d) | 41 |
| 3-3 | Mg₆Al₂(OH)₁₆CO₃ x 5H₂O | 3 | 2% Stearainsäure | c) | 35,3 |
| | | | | d) | 42,5 |
| 3-4 | Mg₆Al₂(OH)₁₆CO₃ x 5H₂O | 3 | 5% Baysilone-Öl GPW 2233 | c) | 30,7 |
| | | | | d) | 38,1 |
| 3-5 | Mg₆Al₂(OH)₁₂(CO₃)₃ x 5H₂O | 3 | 5% Polydimethylsiloxan | c) | 21 |
| | | | | d) | 28,4 |

| | | | | | |
|---|---|---|---|---|---|
| a) Die Polyurethane sind auf Basis von Polyethern aufgebaut; | | | | | |
| b) Lichtart: D 65 = Tageslichtlampe; | | | | | |
| c) 0,31% Telongelb 3 RL, 0,32% Telonrot FRL; 0,24% Telonblau BRL; 2,0% Levegal FTS; pH 5,0; 98°C/60 min; | | | | | |
| d) 0,13% Telonorange AGT; 0,22% Telonrubin A5B; 0,20 Telonblau AFN; 1,0% Levegal FTS; 0,5% Avolan IS; pH 5,5; 98°C/60 min. | | | | | |

## Patentansprüche

1. Elastanfasern mit erhöhter Chlorbeständigkeit aus mindestens 85% segmentiertem Polyurethan, **dadurch gekennzeichnet, daß** die Fasern zerteilte Hydrotalcite und/oder andere basische Metall-Aluminium-Hydroxy-Verbindungen insbesondere der allgemeinen Formel (1) enthalten,
M₁₋ₓ²⁺Alₓ(OH)₂A_{x/n}ⁿ⁻ mH₂O (1),
wobei
M²⁺ für Magnesium oder Zink, insbesondere Magnesium steht,
Aⁿ⁻ ein Anion mit der Valenzzahl aus der Reihe OH⁻, F⁻, Cl⁻, Br⁻, CO₃²⁻, SO₄²⁻, HPO₄²⁻, Silikat, Acetat oder Oxalat, insbesondere CO₃²⁻ ist,
0 < x ≤ 0,5, und 0 ≤ m < 1 ist oder insbesondere der Formel (2)
MgₛAlₜ(OH)ᵤ(A²⁻)ᵥ wH₂O (2)
wobei
s eine Zahl von 1 bis 15,
t eine Zahl von 1 bis 8,
u eine Zahl von 1 bis 40,
w eine Zahl von 0 bis 20 und
v eine Zahl von 1 bis 5 ist und
A²⁻ ein Anion aus der Reihe CO₃²⁻, SO₄²⁻, HPO₄²⁻, Silikat oder Oxalat, insbesondere CO₃²⁻, ist,
wobei diese einen mittleren Teilchendurchmesser (Zahlenmittel) von 10µm oder weniger aufweisen,
und wobei die Metall-Aluminium-Hydroxy-Verbindungen mit 0,1 bis 30 Gew.-%, insbesondere mit 0,5 bis 25 Gew.-% Polyorganosiloxanen und/oder Polyorganohydrogensiloxanen beschichtet sind.

2. Elastanfasern nach Anspruch 1, **dadurch gekennzeichnet, daß** die Polyorganosiloxane solche der allgemeinen Formel (8) sind:
(R⁵)₃SiO-(-SiR¹R⁴O-)ₓ-(-SiR²R⁷O-)_{y}-(-SiR³HO-)_{z}-Si(R⁶)₃ (8),
in der
x eine Zahl von 0 bis 500, y eine Zahl von 0 bis 300 und z eine Zahl von 0 bis 300 ist,
R¹, R², R³, R⁴, R⁵ und R⁶ unabhängig voneinander für einen gesättigten und/oder ungesättigten, gegebenenfalls auch verzweigten Alkylrest mit 1 bis 4 C-Atomen und/oder für einen Arylrest mit 6 bis 9 C-Atomen stehen, der gegebenenfalls auch alkylsubstituiert ist und
R⁷ für einen Alkylrest mit 6 bis 18 C-Atomen oder für Wasserstoff steht.

3. Elastanfasern nach Anspruch 2, **dadurch gekennzeichnet, daß** in Formel (8) der Polyorganosiloxane x eine Zahl von 0 bis 100, insbesondere die Zahl 0, y eine Zahl von 0 bis 100, insbesondere 5 bis 50 und z eine Zahl von 0 bis 100, insbesondere 5 bis 60 ist, und die Summe x + y + z = 25 bis 300 ist.

4. Elastanfasern nach Anspruch 2, **dadurch gekennzeichnet, daß** in Formel (8) der Polyorganosiloxane x eine Zahl von 3 bis 500 ist, y = 0 und z = 0 ist.

5. Elastanfasern nach den Ansprüchen 1 bis 4, **dadurch gekennzeichnet, daß** die Polyorganohydrogensiloxane solche der allgemeinen Formel (13) sind:
(R²)₃SiO-(-SiR¹HO-)ₘ-Si(R³)₃ (13),
wobei in Formel (13) m = 5 bis 200 und die Reste R¹, R², R³ unabhängig voneinander die gleiche Bedeutung der bei Formel (8) stehenden gleichnamigen Reste haben und Polyorganosiloxane und Polyorganohydrogensiloxane im Mengenverhältnis 4:1 bis 1:4 vorliegen.

6. Polyurethanzusammensetzung, **dadurch gekennzeichnet, daß** das Polyurethan zerteilte Hydrotalcite oder andere basische Metall-Aluminium-Hydroxy-Verbindungen, insbesondere der allgemeinen Formel (1)
M₁₋ₓ²⁺Alₓ(OH)₂A_{x/n}ⁿ⁻ mH₂O (1),
wobei
M²⁺ für Magnesium oder Zink, insbesondere Magnesium steht,
Aⁿ⁻ ein Anion mit der Valenzzahl n aus der Reihe OH⁻, F⁻, Cl⁻, Br⁻, CO₃²⁻, SO₄²⁻, HPO₄²⁻, Silikat, Acetat oder Oxalat, insbesondere CO₃²⁻ ist,
0 < x ≤ 0,5 und 0 ≤ m <1 ist,
oder insbesondere der Formel (2)
MgₛAlₜ(OH)ᵤ(A²⁻)ᵥ wH₂O (2)
wobei
s eine Zahl von 1 bis 15,
t eine Zahl von 1 bis 8,
u eine Zahl von 1 bis 40,
w eine Zahl von 0 bis 20 und
v eine Zahl von 1 bis 5 ist und
A²⁻ ein Anion aus der Reihe CO₃²⁻, SO₄²⁻, HPO₄²⁻, Silikat oder Oxalat, insbesondere CO₃²⁻ ist,
enthält, wobei diese einen mittleren Teilchendurchmesser (Zahlenmittel) von 10µm oder weniger aufweisen,
und wobei die Metall-Aluminium-Hydroxy-Verbindungen mit 0,1 bis 30 Gew.-% insbesondere mit 0,5 bis 25 Gew.-% Polyorganosiloxanen und/oder Polyorganohydrogensiloxanen beschichtet sind.

7. Polyurethanzusammensetzung nach Anspruch 6, **dadurch gekennzeichnet, daß** die Polyorganosiloxane solche der allgemeinen Formel (8) sind:
(R⁵)₃SiO-(-SiR¹R⁴O-)ₓ-(-SiR²R⁷O-)_{y}-(-SiR³HO-)_{z}-Si(R⁶)₃ (8),
wobei
x eine Zahl von 0 bis 500,
y eine Zahl von 0 bis 300 und
z eine Zahl von 0 bis 300,
R¹, R², R³, R⁴, R⁵ und R⁶ unabhängig voneinander für einen gesättigten und/oder ungesättigten, gegebenenfalls auch verzweigten Alkylrest mit 1 bis 4 C-Atomen und/oder für einen Arylrest mit 6 bis 9 C-Atomen stehen, der gegebenenfalls auch alkylsubstituiert ist
und
R⁷ für einen Alkylrest mit 6 bis 18 C-Atomen oder für Wasserstoff steht.

8. Polyurethanzusammensetzung nach Anspruch 7, **dadurch gekennzeichnet, daß** in Formel (8) der Polyorganosiloxane x eine Zahl von 0 bis 100, insbesondere die Zahl 0, y eine Zahl von 0 bis 100, insbesondere 5 bis 50 und z eine Zahl von 0 bis 100, insbesondere 5 bis 60 ist, und die Summe x + y + z = 25 bis 300 ist.

9. Polyurethanzusammensetzung nach Anspruch 7, **dadurch gekennzeichnet, daß** in Formel (8) der Polyorganosiloxane x eine Zahl von 3 bis 500 ist, y = 0 und z = 0 ist.

10. Polyurethanzusammensetzung nach den Ansprüchen 6 bis 9, **dadurch gekennzeichnet, daß** die Polyorganohydrogensiloxane solche der allgemeinen Formel (13) sind:
(R²)₃SiO-(-SiR¹HO-)ₘ-Si(R³)₃ (13),
wobei in Formel (13) m = 5 bis 200 und die Reste R¹, R², R³ unabhängig voneinander die gleiche Bedeutung der bei Formel (8) stehenden gleichnamigen Reste haben und Polyorganosiloxane und Polyorganohydrogensiloxane im Mengenverhältnis 4:1 bis 1:4 vorliegen.

11. Textile Waren, insbesondere Strick-, Wirk- oder Webwaren, hergestellt unter Verwendung der Polyurethanfasern gemäß den Ansprüchen 1 bis 5, bevorzugt in Mischung mit synthetischen Hartfasern wie Polyamid-, Polyester- oder Polyacrylfasern und/oder mit Naturfasern wie Wolle, Seide oder Baumwolle.

## Claims

1. Elastane fibres having increased chlorine resistance consisting of at least 85% segmented polyurethane, **characterized in that** the fibres contain divided hydrotalcites and/or other basic metal aluminium hydroxy compounds especially of the general formula (1)
M₁₋ₓ²⁺Alₓ(OH)₂A_{x/n}ⁿ⁻mH₂O (1)
where
M²⁺ represents magnesium or zinc, in particular magnesium,
Aⁿ⁻ is an anion of valency number n from OH⁻, F⁻, Cl⁻, Br⁻, CO₃²⁻, SO₄²⁻, HPO₄²⁻, silicate, acetate or oxalate, especially CO₃²⁻,
0 < x ≤ 0.5 and 0 ≤ m < 1, or in particular of the formula (2)
MgₛAlₜ(OH)ᵤ(A²⁻)ᵥwH₂O (2)
where
s is from 1 to 15,
t is from 1 to 8,
u is from 1 to 40,
w is from 0 to 20,
v is from 1 to 5, and
A²⁻ is an anion from CO₃²⁻, SO₄²⁻, HPO₄²⁻, silicate or oxalate, especially CO₃²⁻,
these having a number average particle diameter of 10 µm or less
and the metal aluminium hydroxy compounds being coated with 0.1 to 30 wt.%, especially with 0.5 to 25 wt.%, of polyorganosiloxanes and/or polyorganohydrosiloxanes.

2. Elastane fibres according to Claim 1, **characterized in that** the polyorganosiloxanes are polyorganosiloxanes of the general formula (8):
(R⁵)₃SiO-(-SiR¹R⁴O-)ₓ-(-SiR²R⁷O-)_{y}-(-SiR³HO-)_{z}-Si(R⁶)₃ (8),
where
x is a number from 0 to 500, y is a number from 0 to 300 and z is a number from 0 to 300,
R¹, R², R³, R⁴, R⁵ and R⁶ independently represent a saturated and/or unsaturated, linear or branched alkyl radical having 1 to 4 carbon atoms and/or an aryl radical having 6 to 9 carbon atoms which is optionally alkyl substituted, and
R⁷ represents an alkyl radical having 6 to 18 carbon atoms or hydrogen.

3. Elastane fibres according to Claim 2, **characterized in that** in formula (8) of the polyorganosiloxanes x is a number from 0 to 100, in particular 0, y is a number from 0 to 100, in particular 5 to 50, and z is a number from 0 to 100, in particular 5 to 60, and the sum x + y + z is = 25 to 300.

4. Elastane fibres according to Claim 2, **characterized in that** in formula (8) of the polyorganosiloxanes x is a number from 3 to 500, y is = 0 and z is = 0.

5. Elastane fibres according to Claims 1 to 4, **characterized in that** the polyorganohydrosiloxanes are polyorganohydrosiloxanes of the general formula (13):
(R²)₃SiO-(-SiR¹HO-)ₘ-Si(R³)₃ (13)
where in formula (13) m is = 5 to 200 and the R¹, R² and R³ radicals independently have the same meaning as like radicals have in the formula (8) and polyorganosiloxanes and polyorganohydrosiloxanes are present in a quantitative ratio in the range from 4:1 to 1:4.

6. Polyurethane composition, **characterized in that** the polyurethane contains divided hydrotalcites or other basic metal aluminium hydroxy compounds especially of the general formula (1)
M₁₋ₓ²⁺Alₓ(OH)₂A_{x/n}ⁿ⁻mH₂O (1)
where
M²⁺ represents magnesium or zinc, in particular magnesium,
Aⁿ⁻ is an anion of valency number n from OH⁻, F⁻, Cl⁻, Br⁻, CO₃²⁻, SO₄²⁻, HPO₄²⁻, silicate, acetate or oxalate, especially CO₃²⁻,
0 < x ≤ 0.5 and 0 ≤ m < 1,
or in particular of the formula (2)
MgₛAlₜ(OH)ᵤ(A²⁻)ᵥwH₂O (2)
where
s is from 1 to 15,
t is from 1 to 8,
u is from 1 to 40,
w is from 0 to 20,
v is from 1 to 5, and
A²⁻ is an anion from CO₃²⁻, SO₄²⁻, HPO₄²⁻, silicate or oxalate, especially CO₃²⁻,
these having a number average particle diameter of 10 µm or less
and the metal aluminium hydroxy compounds being coated with 0.1 to 30 wt.%, especially with 0.5 to 25 wt.%, of polyorganosiloxanes and/or polyorganohydrosiloxanes.

7. Polyurethane composition according to Claim 6, **characterized in that** the polyorganosiloxanes are polyorganosiloxanes of the general formula (8):
(R⁵)₃SiO-(-SiR¹R⁴O-)ₓ-(-SiR²R⁷O-)_{y}-(-SiR³HO-)_{z}-Si(R⁶)₃ (8),
where
x is a number from 0 to 500,
y is a number from 0 to 300 and
z is a number from 0 to 300,
R¹, R², R³, R⁴, R⁵ and R⁶ independently represent a saturated and/or unsaturated, linear or branched alkyl radical having 1 to 4 carbon atoms and/or an aryl radical having 6 to 9 carbon atoms which is optionally alkyl substituted
and
R⁷ represents an alkyl radical having 6 to 18 carbon atoms or hydrogen.

8. Polyurethane composition according to Claim 7, **characterized in that** in formula (8) of the polyorganosiloxanes x is a number from 0 to 100, in particular 0, y is a number from 0 to 100, in particular 5 to 50, and z is a number from 0 to 100, in particular 5 to 60, and the sum x + y + z is = 25 to 300.

9. Polyurethane composition according to Claim 7, **characterized in that** in formula (8) of the polyorganosiloxanes x is a number from 3 to 500, y is = 0 and z is = 0.

10. Polyurethane composition according to Claims 6 to 9, **characterized in that** the polyorganohydrosiloxanes are polyorganohydrosiloxanes of the general formula (13):
(R²)₃SiO-(-SiR¹HO-)ₘ-Si(R³)₃ (13)
where in formula (13) m is = 5 to 200 and the R¹, R² and R³ radicals independently have the same meaning as like radicals have in the formula (8) and polyorganosiloxanes and polyorganohydrosiloxanes are present in a quantitative ratio in the range from 4:1 to 1:4.

11. Textile goods, especially knitted or woven goods, produced using the polyurethane fibres according to Claims 1 to 5, preferably in admixture with synthetic hard fibres such as polyamide, polyester or acrylic fibres and/or with natural fibres such as wool, silk or cotton.

## Revendications

1. Fibres d'élasthanne présentant une résistance élevée au chlore, comprenant au moins 85% de polyuréthane segmenté, **caractérisées en ce que** les fibres contiennent des hydrotalcites broyées et/ou d'autres composés basiques hydroxy de métal et d'aluminium, en particulier de formule générale (1),
M₁₋ₓ²⁺Alₓ(OH)₂A_{x/n}ⁿ⁻ mH₂O (1),
où
M²⁺ représente magnésium ou zinc, en particulier magnésium,
Aⁿ⁻ représente un anion avec le nombre de valence de la série OH⁻, F⁻, Cl⁻, Br⁻, CO₃²⁻, SO₄²⁻ HPO₄²⁻, silicate, acétate ou oxalate, en particulier CO₃²⁻,
0 < x ≤ 0,5, et 0 ≤ m < 1 ou en particulier de formule (2)
MgₛAlₜ(OH)ᵤ(A²⁻)ᵥwH₂O (2)
où
s représente un nombre de 1 à 15,
t représente un nombre de 1 à 8,
u représente un nombre de 1 à 40,
w représente un nombre de 0 à 20 et
v représente un nombre de 1 à 5 et
A²⁻ représente un anion de la série CO₃²⁻, SO₄²⁻, HPO₄²⁻, silicate ou oxalate, en particulier CO₃²⁻,
ceux-ci présentant un diamètre de particule moyen (moyenne numérique) de 10 µm ou moins,
et les composés hydroxy de métal et d'aluminium étant revêtus de 0,1 à 30% en poids, en particulier de 0,5 à 25% en poids de polyorganosiloxanes et/ou de polyorganohydrogénosiloxanes.

2. Fibres d'élasthanne selon la revendication 1, **caractérisées en ce que** les polyorganosiloxanes sont des polyorganosiloxanes de formule générale (8) :
(R⁵)₃SiO-(-SiR¹R⁴O-)ₓ-(-SiR²R⁷O-)_{y}-(-SiR³HO-)_{z}-Si(R⁶)₃ (8),
dans laquelle
x représente un nombre de 0 à 500, y représente un nombre de 0 à 300 et z représente un nombre de 0 à 300,
R¹, R², R³, R⁴, R⁵ et R⁶ représentent, indépendamment l'un de l'autre, un radical alkyle saturé et/ou insaturé, le cas échéant également ramifié, comprenant 1 à 4 atomes de carbone et/ou un radical aryle comprenant 6 à 9 atomes de carbone, qui est le cas échéant également substitué par alkyle et
R⁷ représente un radical alkyle comprenant 6 à 18 atomes de carbone ou hydrogène.

3. Fibres d'élasthanne selon la revendication 2, **caractérisées en ce que**, dans la formule (8) des polyorganosiloxanes, x représente un nombre de 0 à 100, en particulier le nombre 0, y représente un nombre de 0 à 100, en particulier 5 à 50 et z représente un nombre de 0 à 100, en particulier 5 à 60, et la somme x + y + z = 25 à 300.

4. Fibres d'élasthanne selon la revendication 2, **caractérisées en ce que**, dans la formule (8) des polyorganosiloxanes, x représente un nombre de 3 à 500, y = 0 et z = 0.

5. Fibres d'élasthanne selon les revendications 1 à 4, **caractérisées en ce que** les polyorganohydrogénosiloxanes sont des polyorganohydrogénosiloxanes de formule générale (13):
(R²)₃SiO-(-SiR¹HO-)ₘ-Si(R³)₃ (13),
où, dans la formule (13) m = 5 à 200 et les radicaux R¹, R², R³ présentent, indépendamment l'un de l'autre, la même signification que les radicaux du même nom indiqués pour la formule (8) et les polyorganosiloxanes et les polyorganohydrogénosiloxanes se trouvant dans un rapport de quantités de 4:1 à 1:4.

6. Composition de polyuréthane **caractérisée en ce que** le polyuréthane contient des hydrotalcites broyées et/ou d'autres composés basiques hydroxy de métal et d'aluminium, en particulier de formule générale (1),
M₁₋ₓ²⁺Alₓ(OH)₂A_{x/n}ⁿ⁻ mH₂O (1),
où
M²⁺ représente magnésium ou zinc, en particulier magnésium,
Aⁿ⁻ représente un anion avec le nombre de valence n de la série OH⁻, F⁻, Cl⁻, Br⁻, CO₃²⁻, SO₄²⁻ HPO₄²⁻, silicate, acétate ou oxalate, en particulier CO₃²⁻,
0 < x ≤ 0,5, et 0 ≤ m < 1 ou
en particulier de formule (2)
MgₛAlₜ(OH)ᵤ(A²⁻)ᵥ wH₂O (2)
où
s représente un nombre de 1 à 15,
t représente un nombre de 1 à 8,
u représente un nombre de 1 à 40,
w représente un nombre de 0 à 20 et
v représente un nombre de 1 à 5 et
A²⁻ représente un anion de la série CO₃²⁻, SO₄²⁻ HPO₄²⁻, silicate ou oxalate, en particulier CO₃²⁻,
ceux-ci présentant un diamètre de particule moyen (moyenne numérique) de 10 µm ou moins,
et les composés hydroxy de métal et d'aluminium étant revêtus de 0,1 à 30% en poids, en particulier de 0,5 à 25% en poids de polyorganosiloxanes et/ou de polyorganohydrogénosiloxanes.

7. Composition de polyuréthane selon la revendication 6, **caractérisée en ce que** les polyorganosiloxanes sont des polyorganosiloxanes de formule générale (8):
(R⁵)₃SiO-(-SiR¹R⁴O-)ₓ-(-SiR²R⁷O-)_{y}-(-SiR³HO-)_{z}-Si(R⁶)₃ (8)
dans laquelle
x représente un nombre de 0 à 500,
y représente un nombre de 0 à 300 et
z représente un nombre de 0 à 300,
R¹, R², R³, R⁴, R⁵ et R⁶ représentent, indépendamment l'un de l'autre, un radical alkyle saturé et/ou insaturé, le cas échéant également ramifié, comprenant 1 à 4 atomes de carbone et/ou un radical aryle comprenant 6 à 9 atomes de carbone, qui est le cas échéant également substitué par alkyle
et
R⁷ représente un radical alkyle comprenant 6 à 18 atomes de carbone ou hydrogène.

8. Composition de polyuréthane selon la revendication 7, **caractérisée en ce que**, dans la formule (8) des polyorganosiloxanes, x représente un nombre de 0 à 100, en particulier le nombre 0, y représente un nombre de 0 à 100, en particulier de 5 à 50 et z représente un nombre de 0 à 100, en particulier de 5 à 60, et la somme x + y + z = 25 à 300.

9. Composition de polyuréthane selon la revendication 7, **caractérisée en ce que**, dans la formule (8) des polyorganosiloxanes, x représente un nombre de 3 à 500, y = 0 et z = 0.

10. Composition de polyuréthane selon les revendications 6 à 9, **caractérisée en ce que** les polyorganohydrogénosiloxanes sont des polyorganohydrogénosiloxanes de formule générale (13):
(R²)₃SiO-(-SiR¹HO-)ₘ-Si(R³)₃ (13),
où, dans la formule (13) m = 5 à 200 et les radicaux R¹, R², R³ présentent, indépendamment l'un de l'autre, la même signification que les radicaux du même nom indiqués pour la formule (8) et les polyorganosiloxanes et les polyorganohydrogénosiloxanes se trouvant dans un rapport de quantités de 4:1 à 1:4.

11. Articles textiles, en particulier tricots, étoffes et toiles, réalisés en utilisant les fibres en polyuréthane selon les revendications 1 à 5, de préférence en mélange avec des fibres synthétiques dures, telles que des fibres en polyamide, polyester ou polyacryle et/ou avec des fibres naturelles, telles que la laine, la soie ou le coton.
